**Europäisches Patentamt**

**European Patent Office**

**Office européen des brevets**

(19)

(11)  **EP 0 514 941 B1**

(12)  # EUROPEAN PATENT SPECIFICATION

(45) Date of publication and mention
of the grant of the patent:
**09.10.1996  Bulletin 1996/41**

(51) Int. Cl.$^6$: **B01D 53/86**, C01B 17/76,
C01B 17/79

(21) Application number: **92108710.2**

(22) Date of filing: **22.05.1992**

(54) **Process for the separation of sulphur oxides from offgases**

Verfahren zum Abtrennen von Schwefeloxiden aus Abgasen

Procédé pour enlever les oxydes de soufre des gaz d'échappement

(84) Designated Contracting States:
**AT DE ES FR GB IT NL**

(30) Priority:  **24.05.1991 DK 980/91**

(43) Date of publication of application:
**25.11.1992  Bulletin 1992/48**

(73) Proprietor: **Haldor Topsoe A/S**
**DK-2800 Lyngby (DK)**

(72) Inventors:
• **Schoubye, Peter**
**DK-2950 Vedbaek (DK)**

• **Topsoe, Haldor Frederik Axel**
**DK-2950 Vedbaek (DK)**

(74) Representative: **Grünecker, Kinkeldey,**
**Stockmair & Schwanhäusser**
**Anwaltssozietät**
**Maximilianstrasse 58**
**80538 München (DE)**

(56) References cited:
WO-A-89/12025      GB-A- 2 051 761
US-A- 3 615 196      US-A- 4 781 902

Printed by Rank Xerox (UK) Business Services
2.13.7/3.4

**Description**

This invention is directed towards a process for the separation of sulphur oxides from offgases. More particularly, the invention involves catalytic adsorption and oxidation of sulphur dioxide on a solid acceptor having catalytic activity in the oxidation of sulphur dioxide to sulphur trioxide, and removal of desorbed sulphur trioxide by conversion to sulphuric acid.

In the processes most commonly used for the removal of sulphur oxides from industrial offgases, sulphur oxides are separated from the offgases by washing with aqueous solutions or slurries of alkaline compounds, such as calcium hydroxide or calcium carbonate and sulphate, and separating the formed solid sulphites or sulphates from the offgases. Other conventionally used methods of purifying sulphur containing offgases, comprise oxidation of sulphur compounds in the offgases to sulphur trioxide and condensing the produced sulphur trioxide as sulphuric acid.

It is further known to adsorb sulphur dioxide on solid acceptors. A solid acceptor for use in the separation of sulphur dioxide from gaseous mixtures of sulphur dioxide and air is described in GB-A-1,592,378. The described acceptor comprises copper and copper oxides promoted with platinum and rhenium on alumina-carrier material. When contacted with sulphur dioxide containing air, the acceptor is stated to retain up to 98% of sulphur dioxide, with a regeneration efficiency of the loaded acceptor of up to 98% at elevated temperature in the presence of a reducing gas.

Sulphur dioxide separation by alternate adsorption-desorption cycles is disclosed in US-A-3,989,798, where in a first cycle sulphur dioxide in offgas is adsorbed on a vanadium oxide adsorbent, and in a subsequent cycle desorbed by contact with a reducing gas.

US-A-3615196 discloses a process for the conversion of $SO_2$ comprising the cyclic and sequential steps of continuously passing the flue gas at a temperature of about 316 to 482°C (600 to 900°F) into contact with a catalyst comprising potassium oxide and vanadium pentoxide catalyst in an absorption zone, then continuously passing the catalyst containing absorbed $SO_2$ into contact with an oxygen containing gas at a temperature of about 482 to 649°C (900 to 1200°F) in a conversion and desorption zone and recovering desorbed $SO_3$ whereby vanadium oxide functions as the catalyst and as the absorbent.

It is the object of the present invention to improve the overall process economy of adsorption processes for the removal of sulphur oxides in offgases, using a solid sulphur oxide adsorbent which is regenerable by air and from which adsorbed sulphur oxides are desorbed as sulphur trioxide during regeneration.

Said object is solved by a process for the separation of sulphur oxides from offgases, comprising the steps of,

passing at a temperature from 250°C to 400°C the sulphur oxides containing offgas through a fixed bed of a sulphur oxide adsorbent, having catalytic activity in the oxidation of sulphur oxides to sulphur trioxide and comprising supported on a porous carrier a mixture of vanadium pentoxide and sulphates of one or more alkali metals;
adsorbing and converting on the adsorbent sulphur oxides to sulphur trioxide;
regenerating the sulphur trioxide loaded adsorbent with air at a temperature from 500°C to 650°C;
recirculating a part of the regeneration air to the fixed bed of the adsorbent being regenerated; and
removing desorbed sulphur trioxide from the regeneration air by hydration of the desorbed sulphur trioxide to sulphuric acid and condensing the sulphuric acid in a sulphuric acid condenser.

In a preferred embodiment of the invention the sulphur oxide adsorbent comprises a porous silica carrier with vanadium pentoxide and pyrosulphates of alkalimetals loaded in its pore system.

A particular preferred adsorbent for use in the inventive process comprises a porous silica carrier with a pore volume of between 0,3-1 $cm^3$/g loaded with 5-9 wt% vanadium pentoxide and the pyrosulphates of sodium and potassium in a molar ratio of K/V of 2-4 and Na/V of 0-1, as commercial available from Haldor Topsøe A/S, Denmark, sold under the tradename "VK-Catalyst", either in the form of ring shaped catalyst particles or as monolithic blocks with straight channels through the blocks.

In the operation of the process, sulphur oxides in the offgas, typically in the form of $SO_2$, are in a first process step catalytically oxidized to $SO_3$ at a temperature of between 250-400°C by contact with vanadium pentoxide according to the reaction:

$$SO_2 + V_2O_5 \rightarrow SO_3 \cdot V_2O_4 \qquad (1)$$

Formed $SO_3$ is then adsorbed by the pyrosulphate in the pore system of the adsorbent through conversion of pyrosulphate to higher pyrosulphates:

$$SO_3 + S_2O_7^{2-} \rightarrow SO_3O_{10}^{2-} \qquad (2)$$

Spent adsorbent, loaded with sulphur trioxide is in a subsequent process step, regenerated with air.

2

At temperatures above 500°C SO$_3$ desorbs from the pyrosulphates and vanadium tetroxide is oxidized to vanadium pentoxide, according to the following reaction scheme:

$$S_3O_{10}^{2-} \rightarrow S_2O_7^{2-} + SO_3 \qquad (3)$$

$$V_2O_4 + \tfrac{1}{2}O_2 \rightarrow V_2O_5 \qquad (4)$$

As mentioned hereinbefore the basic concept of the invention relates to the reduction of process costs in the removal of sulphur oxide. This is obtained in the above process through concentrating the content of sulphur oxides in the offgas to be cleaned by adsorption on a solid adsorbent-catalyst as described above and desorption of produced sulphur trioxide from the adsorbent into a much reduced volume of air compared to the volume of offgas and by recirculating a part or most of the regeneration air back to the adsorbent.

Desorbed sulphur trioxide in the regeneration air is finally removed from the air by hydration of sulphur trioxide to sulphuric acid vapours and condensation of the formed sulphuric acid vapours in a sulphuric acid condenser.

A particular suitable sulphuric acid condenser for use in the inventive process is the heat exchanger-sulphuric acid condenser described in WO-A-89/12024.

Depending on the amount of air used during the regeneration of the adsorbent and on the recycle factor, the size of the sulphuric acid condenser for the final removal of sulphur trioxide is diminished in the order of 10-25 times, when compared to condensers employed in offgas desulphurization processes by which SO$_2$ is continuous oxidized to SO$_3$ followed by hydration of SO$_3$ and condensation of formed sulphuric acid vapours from the offgas.

The process of the present invention may advantageously be performed in a continuous manner in at least two beds of the adsorbent operating in parallel, such as at least one bed is stepwise operated in adsorption mode, and at least a second bed stepwise in regeneration mode.

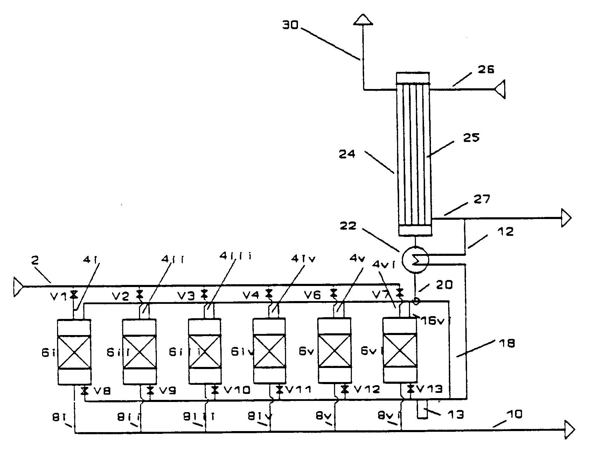

The above will become more evident from the following, detailed description and the attached drawing, in which the sole Figure represents a simplified flow diagram of a specific embodiment of the process of the present invention.

The Figure shows a flow diagram of a desulphurization plant employing 6 adsorption reactors operating in parallel, with one reactor always under regeneration. During regeneration the reactors are connected to a sulphuric acid condenser as described in more detail in the aforementioned WO-A-89/12024.

In a first operation cycle sulphur oxides containing offgas in line 2 is distributed at a temperature of between 250°C and 450°C to reactors 6i-6vi through valve guided lines 4i-4vi.

Reactor 66 is in this cycle under regeneration as further described below. Each of reactors 6i-6vi is loaded with a fixed bed of the above commercial Haldor Topsøe SO$_2$-adsorbent-catalyst in the form of monolithic blocks with straight channels of 6 mm hydraulic diameter. During its passage through reactors 6i-6vi SO$_2$ in the gas is oxidized and adsorbed on the adsorbent-catalyst, and substantially sulphur-free gas leaves the reactors in lines 8i-8vi and is vented to the atmosphere through line 10.

Reactor 6vi containing in this cycle spent adsorbent-catalyst from a previous adsorption cycle is regenerated by air at a temperature of from 350-600°C supplied on line 12 and recirculation line 18.

During regeneration with hot air, SO$_3$, adsorbed on the adsorbent-catalyst is desorbed as described in detail herein before. SO$_3$ loaded regeneration air is then withdrawn from reactor 6vi through valve V13. A part of this air is recirculated through line 18, and mixed with further air from line 12.

The remaining part of the spent regeneration air is sent in line 20 to sulphuric acid condenser 24.

At high regeneration temperatures a part of the SO$_3$ may decompose to SO$_2$. Therefore, the regeneration air being passed to the sulphuric acid condenser is optionally send to a catalytic oxidation step (not shown in the Figure), wherein SO$_2$ is oxidized to SO$_3$, by contact with a conventional sulphuric acid catalyst before the gas is introduced into condenser 24.

Sulphuric acid condenser 24 is provided with a plurality of glass tubes 25 being externally cooled with air.

In condenser 24, the spent regeneration air flows inside tubes 25 in indirect heat exchange with the cooling air introduced into condenser 24 through line 26. Thereby, SO$_3$ in the air is condensed in the tubes to sulphuric acid as further described in WO-A-89/12024.

Desorbed SO$_3$ and water contained in the spent regeneration air being passed to condenser 24, are condensed as sulphuric acid in air cooled tubes 25. After having passed through tubes 25 cleaned regeneration air leaves condenser 24 and is vented to the atmosphere through line 30.

The cooling air flows on the outside of tubes 25 countercurrently to the spent regeneration air in the tubes. After having cooled the tubes, the cooling air is withdrawn from tower 24 through line 27. A part of the withdrawn cooling air is looped to line 12 and used in this process cycle as fresh regeneration air for reactor 6vi. Before being introduced into reactor 6vi the air is preheated in heat exchanger 22 by indirect heat exchange with the spent regeneration air from reactor 6vi. The preheated air is mixed with recirculated regeneration air from line 18 and the combined stream air further heated by burner 13 before being introduced into the reactor.

Subsequent purification cycles are carried out in similar manner to that described above. In each cycle always 5 reactors are under adsorption and one under regeneration. The valve sequence for 6 consecutive process cycles is shown in Table 1.

Table 1

| Reactors | | | | | | Valves | | | | | | | | | | | |
|---|---|---|---|---|---|---|---|---|---|---|---|---|---|---|---|---|---|
| 6i | 6ii | 6iii | 6iv | 6v | 6vi | V1 | V2 | V3 | V4 | V6 | V7 | V8 | V9 | V10 | V11 | V12 | V13 |
| Ad | Ad | Ad | Ad | Ad | R | O | O | O | O | O | C | C | C | C | C | C | O |
| Ad | Ad | Ad | Ad | R | Ad | O | O | O | O | C | O | C | C | C | C | O | C |
| Ad | Ad | Ad | R | Ad | Ad | O | O | O | C | O | O | C | C | C | O | C | C |
| Ad | Ad | R | Ad | Ad | Ad | O | O | C | O | O | O | C | C | O | C | C | C |
| Ad | R | Ad | Ad | Ad | Ad | O | C | O | O | O | O | C | O | C | C | C | C |
| R | Ad | Ad | Ad | Ad | Ad | C | O | O | O | O | O | O | C | C | C | C | C |

Ad = Adsorption
R = Regeneration
O = open
C = Closed

## Example

Offgas containing 600 ppm $SO_2$, about 7% $H_2O$ and about 4% $O_2$ is treated in the above described reactor system. A total of $10^6$ $Nm^3/h$ of the offgas is distributed at a temperature of 350°C to reactors 6i-6vi, which are operated in adsorption mode. Reactor 6vi is under regeneration. Each of reactors 6i-6vi is loaded with $41 \cdot 10^3$ kg of the aforementioned VK adsorbent-catalyst having an adsorption capacity of about 0,05 kg $SO_3$/kg adsorbent-catalyst By passage through reactors 6i-6v 570 $Nm^3/h$ $SO_2$ in the offgas are adsorbed on the adsorbent-catalyst during an adsorption period of 5 hours. The content of $SO_2$ in the offgas is, thereby, reduced by 95% resulting in a cleaned gas with 30 ppm $SO_2$ and about 5 ppm $SO_3$.

Regeneration of the reactors (in this Example reactor 6vi) is carried out with air flowing in opposite direction to that of the offgas during the adsorption period. 39,000 $Nm^3/h$ of the cooling air leaving tower 24 are used for the regeneration.

The cooling air leaving condenser 24 at a temperature of about 205°C is preheated to about 377°C in heat exchanger 22. During the first 30 minutes of the regeneration period the air is mixed with 40,000 $Nm^3/h$ of spent regeneration air being recycled from the exit of reactor 6vi. The total flow of 79,000 $Nm^3/h$ air is further heated to 580°C in burner 13 upstream to reactor 6vi. By passage of the hot air the reactor is heated and hot waves move through the adsorbent bed. After 30 minutes, about 40,000 $Nm^3$ of hot air have passed through the reactor and hot waves are breaking through the reactor. Recirculation and the burner are then stopped and the reactor is flushed at about 377°C with 39,000 $Nm^3/h$ of the preheated cooling air from tower 24 for the next 30 minutes of the regeneration period.

After a total of 60 minutes the regeneration valve V13 is closed.

During regeneration of reactor 6vi adsorbed $SO_3$ is desorbed into a stream of 40,000 $Nm^3/h$ of regeneration air.

The regeneration air being passed to the sulphuric acid condenser is send to a catalytic $SO_2$ oxidation step prior to introduction into condenser 24. After oxidation of $SO_2$ to $SO_3$, the regeneration air contains 1,41% $SO_3$, 0,014% $SO_2$ and about 3% $H_2O$ and is desulphurized in condenser 24. Before being introduced into condenser 24, the temperature of the spent regeneration air is adjusted to 270°C by indirect heat exchange as mentioned above.

In condenser 24 most of the $SO_3$ contained in the spent regeneration air is condensed as sulphuric acid, which is withdrawn through line 32 at the bottom of the condenser. The cleaned regeneration air containing now about 5 ppm $SO_3$ and 145 ppm $SO_2$ leaves tower 24 through line 30.

## Claims

1.  A process for the separation of sulphur oxides from offgases, comprising the steps of

    passing at a temperature from 250°C to 400°C the sulphur oxides containing offgas through a fixed bed of a sulphur oxide adsorbent, having catalytic activity in the oxidation of sulphur oxides to sulphur trioxide and comprising supported on a porous carrier a mixture of vanadium pentoxide and pyrosulphates of one or more alkali, metals;

adsorbing and converting on the adsorbent sulphur oxides to sulphur trioxide;

regenerating the sulphur trioxide loaded adsorbent with air at a temperature from 500°C to 650°C;

recirculating a part of the regeneration air to the fixed bed of the adsorbent being regenerated; and

removing desorbed sulphur trioxide in the regeneration air by hydration of the desorbed sulphur trioxide to sulphuric acid and condensing the sulphuric acid in a sulphuric acid condenser.

2. The process of claim 1, wherein the sulphur oxide adsorbent comprises a porous silica carrier with the vanadium pentoxide and pyrosulphates of alkali metals loaded in the pore system of the carrier.

3. The process of claim 2, wherein the porous silica carrier comprises a pore volume of between 0.3-1 cm$^3$/g loaded with 5-9 wt% vanadium pentoxide and the pyrosulphates of sodium and/or potassium in a molar ratio of K/V of 2-4 and Na/V of 0-1.

4. The process of claim 1, wherein the sulphuric acid condenser for removing sulphur trioxide contained in the regeneration air is provided with a plurality of tubes being externally cooled by air flowing countercurrently and in indirect heat exchange with the regeneration air inside the tubes.

5. The process of claim 4, wherein a part of the cooling air leaving the sulphuric acid condenser is used as regeneration air during regeneration of the adsorbent.

6. The process of claim 1, wherein the adsorbent is in the form of monolithic blocks with parallel channels having a hydraulic diameter of 3-10 mm, preferably 5-7 mm, for passage of the offgas.

7. The process of claim 1, wherein the stream of regeneration air leaving the regeneration step is passed before the sulphuric acid condenser through a reactor loaded with a sulphuric acid catalyst.

**Patentansprüche**

1. Verfahren zur Abtrennung von Schwefeloxiden aus Abgasen, umfassend die folgenden Verfahrensschritte:

Das Durchleiten des die Schwefeloxide enthaltenden Abgases bei einer Temperatur im Bereich von 250 °C bis 400 °C durch ein Festbett aus einem Schwefeloxid-Adsorbens, das die Oxidation von Schwefeloxiden zu Schwefeltrioxid katalysiert und das ein Gemisch aus Vanadiumpentoxid und mindestens einem Alkalimetallpyrosulfat, das auf einem porösen Träger aufgebracht ist, umfaßt;

das Umwandeln der Schwefeloxide zu Schwefeltrioxid und die Adsorption des Schwefeltrioxids auf dem Adsorbens;

das Regenerieren des mit Schwefeltrioxid beladenen Adsorbens mit Luft bei einer Temperatur im Bereich von 500 °C bis 650 °C;

das Zurückführen eines Teils der Regenerationsluft zu dem Festbett des Adsorbens, das regeneriert wird; und

das Entfernen des desorbierten Schwefeltrioxids aus der Regenerationsluft durch Hydratation des desorbierten Schwefeltrioxids zu Schwefelsäure und das Kondensieren der Schwefelsäure in einem Schwefelsäure-Kühler.

2. Verfahren nach Anspruch 1, worin das Schwefeloxid-Adsorbens einen porösen Silicamaterial-Träger umfaßt, in dessen Porensystem das Vanadiumpentoxid und das Alkalimetallpyrosulfat bzw. die Alkalimetallpyrosulfate eingebracht sind.

3. Verfahren nach Anspruch 2, worin der poröse Silicamaterial-Träger ein Porenvolumen im Bereich von 0,3 bis 1 cm$^3$/g besitzt und mit 5 bis 9 Gew.-% Vanadiumpentoxid und Pyrosulfat(en) von Natrium und/oder Kalium in einem molaren Verhältnis von K/V von 2 bis 4 und Na/V von 0 bis 1 beladen ist.

**4.** Verfahren nach Anspruch 1, worin der Schwefelsäure-Kühler, der zum Entfernen des Schwefeltrioxids, das in der Regenerationsluft enthalten ist, verwendet wird, eine Vielzahl von Röhren enthält, die extern mit Luft gekühlt werden, welche in Gegenstromrichtung und in indirektem Wärmeaustausch mit der Regenerationsluft innerhalb der Röhren fließt.

**5.** Verfahren nach Anspruch 4, worin ein Teil der Kühlluft, die den Schwefelsäure-Kühler verläßt, als Regenerationsluft während der Regeneration des Adsorbens verwendet wird.

**6.** Verfahren nach Anspruch 1, worin das Adsorbens in Form von monolithischen Blöcken mit parallelen Kanälen mit einem hydraulischen Durchmesser von 3 bis 10 mm, bevorzugt von 5 bis 7 mm, durch die das Abgas hindurchfließt, vorliegt.

**7.** Verfahren nach Anspruch 1, worin der Regenerationsluftstrom, der den Regenerationszyklus verläßt, vor dem Schwefelsäure-Kühler durch einen Reaktor geleitet wird, der mit einem Schwefelsäurekatalysator beladen ist.

## Revendications

**1.** Procédé pour enlever les oxydes de soufre des gaz d'échappement, comprenant les étapes consistant à

faire passer, à une température de 250 °C à 400 °C, des gaz d'échappement contenant les oxydes de soufre au travers d'un lit fixe d'un adsorbant d'oxydes de soufre, ayant une activité catalytique dans l'oxydation des oxydes de soufre en anhydride sulfurique et comprenant, déposé sur un support poreux, un mélange de pentoxyde de vanadium et de pyrosulfates d'un ou plusieurs métaux alcalins ;
adsorber et convertir, sur l'adsorbant, les oxydes de soufre en anhydride sulfurique ;
régénérer l'adsorbant chargé d'anhydride sulfurique avec de l'air à une température de 500 °C à 650 °C ;
faire recirculer une partie de l'air de régénération au lit fixe de l'adsorbant étant régénéré ; et à
éliminer l'anhydride sulfurique désorbé dans l'air de régénération par hydratation de l'anhydride sulfurique désorbé en acide sulfurique, et à condenser l'acide sulfurique dans un condensateur d'acide sulfurique.

**2.** Procédé selon la revendication 1, dans lequel l'adsorbant d'oxydes de soufre comprend un support poreux en silice, le pentoxyde de vanadium et les pyrosulfates de métaux alcalins étant chargés dans le système de pores du support.

**3.** Procédé selon la revendication 2, dans lequel le support poreux en silice comprend un volume de pores de 0,3 à 1 cm$^3$/g chargé avec 5 à 9 % en poids de pentoxyde de vanadium et des pyrosulfates de sodium et/ou de potassium en un rapport molaire de K/V de 2 à 4 et de Na/V de 0 à 1.

**4.** Procédé selon la revendication 1, dans lequel le condensateur d'acide sulfurique pour éliminer l'anhydride sulfurique contenu dans l'air de régénération est muni de plusieurs tubes refroidis de façon externe par de l'air s'écoulant à contre-courant et en échange de chaleur indirect avec l'air de régénération dans les tubes.

**5.** Procédé selon la revendication 4, dans lequel une partie de l'air de refroidissement quittant le condensateur d'acide sulfurique est utilisé en tant qu'air de régénération pendant la régénération de l'adsorbant.

**6.** Procédé selon la revendication 1, dans lequel l'adsorbant est sous la forme de blocs monolithiques avec des canaux parallèles ayant un diamètre hydraulique de 3 à 10 mm, de préférence 5 à 7 mm, pour le passage des gaz d'échappement.

**7.** Procédé selon la revendication 1, dans lequel le courant d'air de régénération quittant l'étape de régénération est envoyé avant le condensateur d'acide sulfurique au travers d'un réacteur chargé avec un catalyseur acide sulfurique.